# EUROPEAN PATENT SPECIFICATION

(11) **EP 4 642 147 B1**
(45) Date of publication and mention of the grant of the patent: **09.12.2026**
(21) Application number: 23921408.3
(22) Date of filing: 07.02.2023
(51) Int. Cl.: H04L 67/51, H04L 41/14, H04L 41/16, H04L 41/0803, H04L 41/0806, H04W 48/18, H04W 76/14, H04L 41/0853, H04L 43/0817

(54) **SUPPORTING SPLIT COMPUTING AND DISTRIBUTED COMPUTING IN WIRELESS COMMUNICATION SYSTEM**
UNTERSTÜTZUNG VON GETEILTER BERECHNUNG UND VERTEILTER BERECHNUNG IN EINEM DRAHTLOSKOMMUNIKATIONSSYSTEM
PRISE EN CHARGE D'UN CALCUL DIVISÉ ET D'UN CALCUL DISTRIBUÉ DANS UN SYSTÈME DE COMMUNICATION SANS FIL

(43) Date of publication of application: 29.10.2025
(73) Proprietor: Samsung Electronics Co., Ltd., Suwon-si, Gyeonggi-do 16677 (KR)
(72) Inventor: CHA, Jiyoung, Suwon-si, Gyeonggi-do 16677 (KR); KIM, Sunhyun, Suwon-si, Gyeonggi-do 16677 (KR); KIM, Dongmyung, Suwon-si, Gyeonggi-do 16677 (KR); LEE, Sangho, Suwon-si, Gyeonggi-do 16677 (KR); CHOI, Jinho, Suwon-si, Gyeonggi-do 16677 (KR)
(74) Representative: Gulde & Partner
(86) International application number: PCT/KR2023/001757
(87) International publication number: WO 2024/167034

(56) References cited:
- WO-A1-2021/218718
- WO-A1-2022/020770
- WO-A1-2022/088826
- "3rd Generation Partnership Project; Technical Specification Group Services and System Aspects; Study on 5G System Support for AI/ML-based Services (Release 18)", 3GPP TR 23.700-80, no. V18.0.0, 21 December 2022 (2022-12-21), pages 1 - 220, XP052234764
- SHABNAM SULTANA, ERICSSON: "KI#2, Sol#31: Updates to add Analytics container between UE and NWDAF", SA WG2 MEETING #152E, S2-2205636, 10 August 2022 (2022-08-10), XP052184039
- KARJEE JYOTIRMOY; ANAND KARTIK; BHARGAV VANAMALA NARASIMHA; NAIK PRAVEEN S; DABBIRU RAMESH BABU VENKAT; SRINIDHI N: "Split Computing: Dynamic Partitioning and Reliable Communications in IoT-Edge for 6G Vision", 2021 8TH INTERNATIONAL CONFERENCE ON FUTURE INTERNET OF THINGS AND CLOUD (FICLOUD), IEEE, 23 August 2021 (2021-08-23), pages 233 - 240, XP034015524, DOI: 10.1109/FiCloud49777.2021.00041
- SAMSUNG ELECTRONICS CO., LTD.: "Discussion on AI/ML", 3GPP TSG SA WG4 MEETING #116E, S4-211402, 4 November 2021 (2021-11-04), XP052179735
- LI QIAN, DING ZONGRUI, TONG XIAOPENG, WU GENG, STOJANOVSKI SASO, LUETZENKIRCHEN THOMAS, KOLEKAR ABHIJEET, BANGOLAE SANGEETHA, PALA: "6G Cloud-Native System: Vision, Challenges, Architecture Framework and Enabling Technologies", IEEE ACCESS, vol. 10, 1 January 2022 (2022-01-01), pages 96602 - 96625, XP093082563, DOI: 10.1109/ACCESS.2022.3205341

## Description

### [Technical Field]

The disclosure relates to a network structure and an apparatus for supporting split computing and distributed computing in a wireless communication system and, particularly, to a method and an apparatus for efficiently determining a computing configuration during a procedure of establishing a PDU session.

### [Background Art]

A review of the development of mobile communication from generation to generation shows that the development has mostly been directed to technologies for services targeting humans, such as voice-based services, multimedia services, and data services. It is expected that connected devices which are exponentially increasing after commercialization of 5G communication systems will be connected to communication networks. Examples of things connected to networks may include vehicles, robots, drones, home appliances, displays, smart sensors connected to various infrastructures, construction machines, and factory equipment. Mobile devices are expected to evolve in various formfactors, such as augmented reality glasses, virtual reality headsets, and hologram devices. In order to provide various services by connecting hundreds of billions of devices and things in the 6G era, there have been ongoing efforts to develop improved 6G communication systems. For these reasons, 6G communication systems are referred to as "beyond-5G" systems.

6G communication systems, which are expected to be implemented approximately by 2030, will have a maximum transmission rate of tera (1,000 giga)-level bps and a radio latency of 100µsec, and thus will be 50 times as fast as 5G communication systems and have the 1/10 radio latency thereof.

In order to accomplish such a high data transmission rate and an ultra-low latency, it has been considered to implement 6G communication systems in a terahertz band (for example, 95GHz to 3THz bands). It is expected that, due to severer path loss and atmospheric absorption in the terahertz bands than those in mmWave bands introduced in 5G, a technology capable of securing the signal transmission distance (that is, coverage) will become more crucial. It is necessary to develop, as major technologies for securing the coverage, multiantenna transmission technologies including radio frequency (RF) elements, antennas, novel waveforms having a better coverage than OFDM, beamforming and massive MIMO, full dimensional MIMO (FD-MIMO), array antennas, and large-scale antennas. In addition, there has been ongoing discussion on new technologies for improving the coverage of terahertz-band signals, such as metamaterial-based lenses and antennas, orbital angular momentum (OAM), and reconfigurable intelligent surface (RIS).

Moreover, in order to improve the frequency efficiencies and system networks, the following technologies have been developed for 6G communication systems: a full-duplex technology for enabling an uplink (UE transmission) and a downlink (node B transmission) to simultaneously use the same frequency resource at the same time; a network technology for utilizing satellites, high-altitude platform stations (HAPS), and the like in an integrated manner; a network structure innovation technology for supporting mobile nodes B and the like and enabling network operation optimization and automation and the like; a dynamic spectrum sharing technology though collision avoidance based on spectrum use prediction, an artificial intelligence (AI)-based communication technology for implementing system optimization by using AI from the technology design step and internalizing end-to-end AI support functions; and a next-generation distributed computing technology for implementing a service having a complexity that exceeds the limit of UE computing ability by using super-high-performance communication and computing resources (mobile edge computing (MEC), clouds, and the like). In addition, attempts have been continuously made to further enhance connectivity between devices, further optimize networks, promote software implementation of network entities, and increase the openness of wireless communication through design of new protocols to be used in 6G communication systems, development of mechanisms for implementation of hardware-based security environments and secure use of data, and development of technologies for privacy maintenance methods.

It is expected that such research and development of 6G communication systems will enable the next hyper-connected experience in new dimensions through the hyper-connectivity of 6G communication systems that covers both connections between things and connections between humans and things. Particularly, it is expected that services such as truly immersive XR, high-fidelity mobile holograms, and digital replicas could be provided through 6G communication systems. In addition, with enhanced security and reliability, services such as remote surgery, industrial automation, and emergency response will be provided through 6G communication systems, and thus these services will be applied to various fields including industrial, medical, automobile, and home appliance fields.

In the existing communication system, when a computing configuration is determined and reflected in a network, an application end in a central cloud or a MEC existing in data network (DN) may determine the computing configuration and then reflection of a network-related configuration required for traffic steering and QoS in the network may be requested through an application function (AF).

As described above, when the computing configuration is determined and reflected in the network according to the prior art, for communication between an application server determining the computing configuration and a UE, establishment of a PDU session between a DN in which the corresponding server is located and the UE may be needed and a procedure of establishing a PDU session with or modifying a PDU session to a newly selected application server may be needed. That is, when a specific application server determines a computing configuration, the corresponding application server may not be included in servers selected to be finally used, and thus an unnecessary PDU session establishment procedure may be performed and accordingly delay may be added to a data path configuration.

Further, an application existing outside the network cannot know a communication characteristic such as a distance between the UE and the server within the network, topology, and mobility of the UE, and thus communication delay and UE mobility cannot be reflected in a process of determining the computing configuration, which may not optimize the determination of the computing configuration.

A prior art of WO 2022/020770 A1 discloses a system for managing computing workloads in next-generation (e.g., 6G) cellular networks. It introduces "compute plane" functions, including a compute control client (Comp CC) at the UE and a compute control function (Comp CF) and service function (Comp SF) at the network. This architecture enables dynamic offloading of computing tasks to the network edge, optimizing latency and resource scaling.

### [Disclosure]

### [Technical Problem]

The disclosure may provide a network structure and an apparatus for determining a computing configuration satisfying a computing requirement of an application in consideration of communication characteristics, such as computing capabilities of UEs and servers, a present status of computing resources, communication delay between a UE and a server, and UE mobility, and a scheme for configuring and managing a data path in an environment in which computing resources are distributed within the network.

### [Technical Solution]

Objects of the invention are covered by methods and network entities for supporting a computing service for an operation of an application executed in the UE based on a determined computing configuration as claimed in the appended independent claims. Preferred embodiments are covered by the appended dependent claims. The scope of the invention is defined by the appended claims.

### [Advantageous Effects]

According to embodiments of the disclosure, the network can operate to satisfy a computing requirement of an application in consideration of communication characteristics, such as computing capabilities of UEs and servers, a present status of computing resources, communication delay between a UE and a server, and UE mobility, and accordingly, quality of experience (QoE) of a user for a computing service requested by the UE can be improved.

### [Description of Drawings]

The above and other aspects, features, and advantages of certain embodiments of the disclosure will be more apparent from the following description taken in conjunction with the accompanying drawings, in which:
FIG. 1 schematically illustrates a network structure according to an embodiment of the disclosure;
FIG. 2 is a block diagram briefly illustrating a network structure according to an embodiment of the disclosure;
FIG. 3 is a flowchart illustrating a path management procedure process according to an embodiment of the disclosure;
FIG. 4 illustrates a NAS CM message defined in the disclosure;
FIG. 5 is a flowchart illustrating a PDU session establishment procedure according to an embodiment of the disclosure;
FIG. 6 is a flowchart illustrating a PDU session establishment procedure according to another embodiment of the disclosure;
FIG. 7 is a flowchart illustrating a PDU session establishment procedure according to another embodiment of the disclosure;
FIG. 8 is a flowchart illustrating a monitoring and update procedure after the PDU session establishment according to an embodiment of the disclosure;
FIG. 9 is a flowchart illustrating a monitoring and update procedure after the PDU session establishment according to another embodiment of the disclosure;
FIG. 10 is a flowchart illustrating a monitoring and update procedure after the PDU session establishment according to another embodiment of the disclosure;
FIG. 11 illustrates classification of computing types of applications operated by the UE according to an embodiment of the disclosure;
FIG. 12 illustrates a structure of a UE according to an embodiment of the present disclosure; and
FIG. 13 illustrates a structure of a network entity according to an embodiment of the disclosure.

### [Mode for Disclosure]

In describing embodiments of the disclosure, descriptions related to technical contents well-known in the art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Further, the size of each element does not completely reflect the actual size. In the drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Further, each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used herein, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" or may be implemented to reproduce one or more CPUs within a device or a security multimedia card.

Hereinafter, the operation principle of the disclosure will be described in detail with reference to the accompanying drawings. In the following description of the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, terms for identifying access nodes, terms referring to network entities, terms referring to messages, terms referring to interfaces between network entities, terms referring to various identification information, and the like are illustratively used for the sake of convenience. Therefore, the disclosure is not limited by the terms as used below, and other terms referring to subjects having equivalent technical meanings may be used.

In a 6G communication system, it is expected for a network to increase support of applications (for example, hologram, XR, neural network, and V2X) requiring a computing capability beyond a UE capability or using artificial intelligence (AI).

In the network, computing resources (application servers) for supporting applications having requirements of high capacity or ultra-low latency are distributed. That is, a plurality of servers having a present status of use of various computing capabilities/abilities and a communication characteristic (for example, transmission delay according to a distance) may be distributed all over the network between an RAN and a central cloud. In such an environment, a need to support coordination for a computing service by the 6G network is increasing.

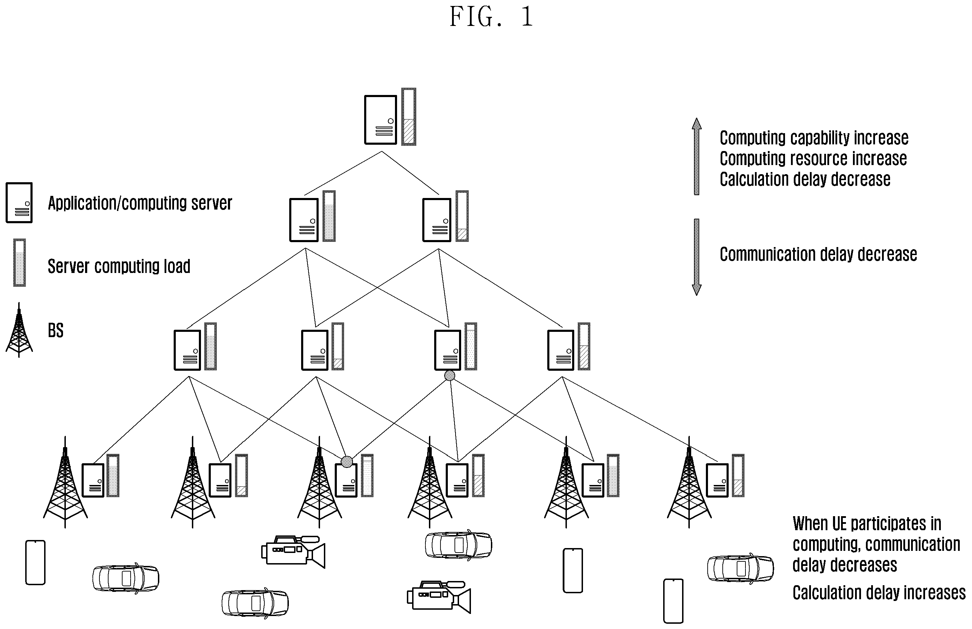

FIG. 1 schematically illustrates a network structure according to an embodiment of the disclosure.

Referring to FIG. 1, in the case of a server closer to a central cloud, when the UE receives supporting of a computing capability therethrough, the computing capability and computing resources may increase and a computation delay may decrease, but a communication delay may increase since a distance from the UE is long. On the other hand, as a distance from the central cloud becomes longer, computing capabilities and computing resources of servers may decrease and the computation delay may increase, but the communication delay may decrease.

When the UE participates in slit computing, an operation in which the UE transmits a computation load to the server and receives the same is omitted, and accordingly the communication delay may decrease. However, in such a case, the computing capability may decrease for the computation load that is not transmitted to the server, and thus the computing delay may increase.

When a server close to the UE is used, the communication delay may decrease but the computing capability and speed of the server may also decrease, and thus it is difficult to allocate all applications to the server close to the corresponding UE.

Accordingly, the disclosure discloses a method of distributing computing capabilities on the network to meet requirements of computing capabilities or delay time required by applications used by a plurality of UEs, and a PDU session establishment procedure considering computing resources and other requirements during the process.

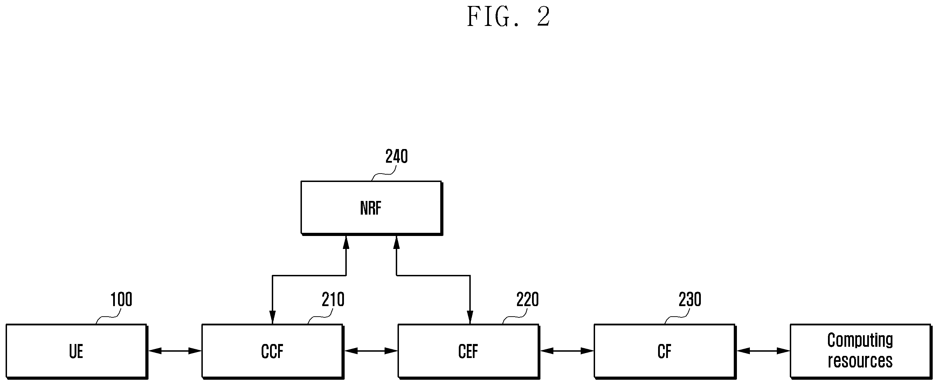

FIG. 2 is a block diagram briefly illustrating a network structure according to an embodiment of the disclosure.

Referring to FIG. 2, a network structure supporting slit computing or distributed computing may be proposed, and the network may be configured in the form including a computing control function (CCF) 210, a computing function (CF) 230, and a computing exposure function (CEF) 220.

The CCF 210 may collect communication capability-related information or computing capability-related information from the UE 100 or the CF 230 and determine a computing configuration in consideration of the collected information. The CCF 210 may transfer information on the determined computing configuration to the UE 100 or the CF 230 and reflect the determined computing information in a path configuration or PDU session establishment process.

The CF 230 may be configured as a network device serving to manage an interface between a server and a network in order to exchange information between a server having a computing capability or an application server and the network. The CF 230 may exist in a visible shape within the network, and various entities may communicate with the CF 230 to exchange information with the server. The CF 230 may play a role of the application function (AF) in the conventional 5G communication system, and additionally support operations which the conventional AP does not support.

The CEF 220 serves to manage an interface between the CF 230 and the network, and specifically, perform capability exposure of the CF 230 and the server and translation between the CF 230 and entities of the network. When the CF 230 is one entity or node in the network, the CF 230 may communicate with entities within the network through the CEF 220. The CEF 220 may play a role of the network exposure function (NEF) in the conventional 5G communication system, and additionally support operations which the conventional CEF 220 does not support.

According to an embodiment of the disclosure, the CEF 220 may register computing resource information through communication with a network repository function (NRF) 240, and the CCF 210 may discover and acquire computing resources through communication with the NRF 240.

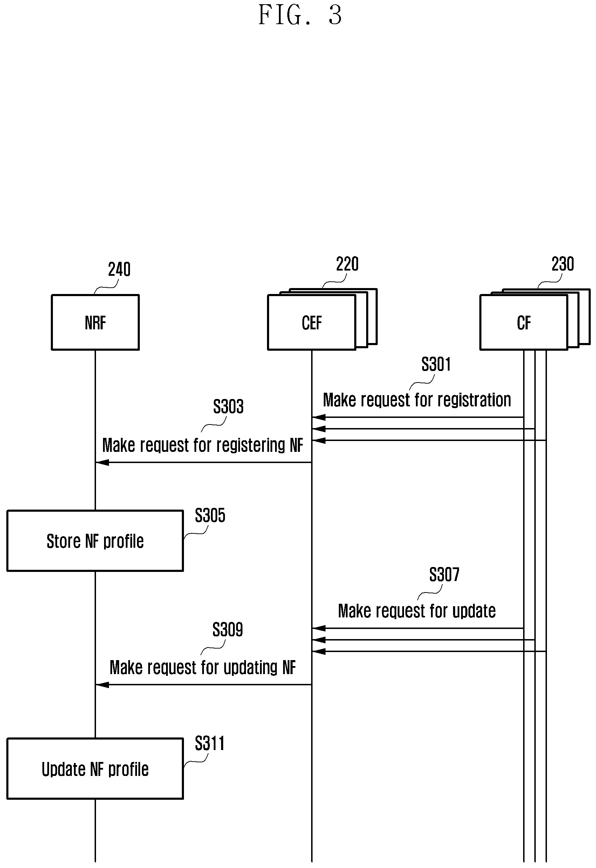

FIG. 3 is a flowchart illustrating a path management procedure process according to an embodiment of the disclosure.

Referring to FIG. 3, the CF 230 may serve to manage an interface between a plurality of computing servers and the network, register the CF 230 itself in the NRF 220, and periodically update a network function (NF) profile for the CF 230.

The NF profile of the CF 230 may include information on a supported computing service, and the information on the supported computing service may include a data network name (DNN), a computation service ID (service ID), and detailed function information within the corresponding computing configuration.

The NF profile of the CF 230 may include information on a present status of computing resources within the computing server and computing speed information.

FIG. 3 illustrates an operation in which the CF 140 registers and updates the NF profile of the CF 130 in the NRF 150 through the CEF 130, which may be an operation in the case in which the CF 230 is untrusted.

That is, according to another embodiment of the disclosure, when the CF 230 is trusted in the network, the CF 230 may register and update the NF profile of the CF 230 by directly communicating with the NRF 240 without passing through the CEF 220.

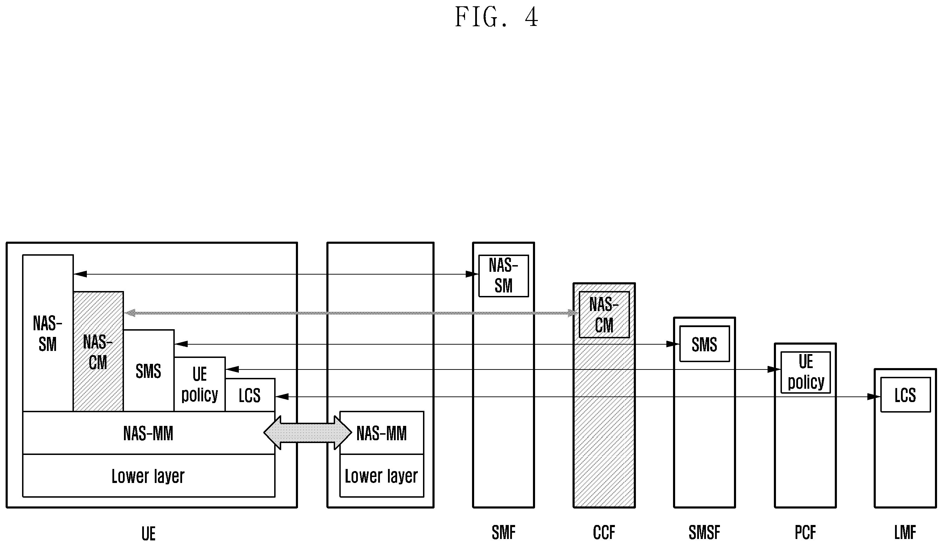

FIG. 4 illustrates a NAS CM message defined in the disclosure.

Referring to FIG. 4, as one of communication methods performed between a terminal or a user equipment (UE) and a CCF, a new NAS message may be proposed in the disclosure, and the NAS message may be referred to as a non-access stratum computing management (NAS CM) message.

According to an embodiment of the disclosure, the NAS CM message transmitted between the terminal or the UE and the CCF may include information which should be acquired from the terminal or the UE in order to determine a computing configuration by the CCF. The NAS CM message may include at least some of the following information.

### • Whether to be supported by the UE

A Horizontal split -compression/decompression: separates workload according to a configuration of the CCF and transfers the same to different servers
B Horizontal split - object detection: primarily performs object detection in workload or separates an area to additional perform/complete object detection simply by multiple servers and transmits the areas to the servers
C Vertical split - deep neural network: AI computing for some layers is performed by the UE

- A present status of computing resources of the UE: for example, the number of instructions and a processing type
- A computation service ID or a DNN: a data network name (DNN) or a computation service ID may be allocated to every computing type of the application to be distinguished from each other, and the UE inserts a computation service ID or a DNN corresponding to a computing type of the requested application into a NAS CM container within a PDU session establishment request message
- The case of AI model split computing: the model size and the total number of layers
- A preferred computation type: offload (the case in which offloading the load for all computation to computing server(s) is preferred without any participation of the UE in computing)/split (the case in which separately performing computation load by the UE and computing server(s) is preferred)/both (the case in which there is no preferred type among both types of offload and split)
- Computing load information (the image/frame size and a frame rate)
- Mobility: a change in GPS information for a specific time (movement by a vehicle or movement by walk is detected and coverage of an allocated server is determined)
- UE power: connected state (plugged)/non-connected state (unplugged)

The NAS CM message according to an embodiment of the disclosure may be transmitted through NAS transport between the UE and an access and mobility management function (AMF), and may transmitted while being included in an N1 CM container together with a PDU session establishment request (N1 SM container) within an N1 NAS message transmitted by the UE.

Information indicating that specific information transmitted by the UE is the NAS CM message may be displayed by configuring a payload container type information element of NAS MM information elements as a specific value.

Referring to FIG. 4, the AMF may receive the CM container from the UE and transfer the same to the CCF.

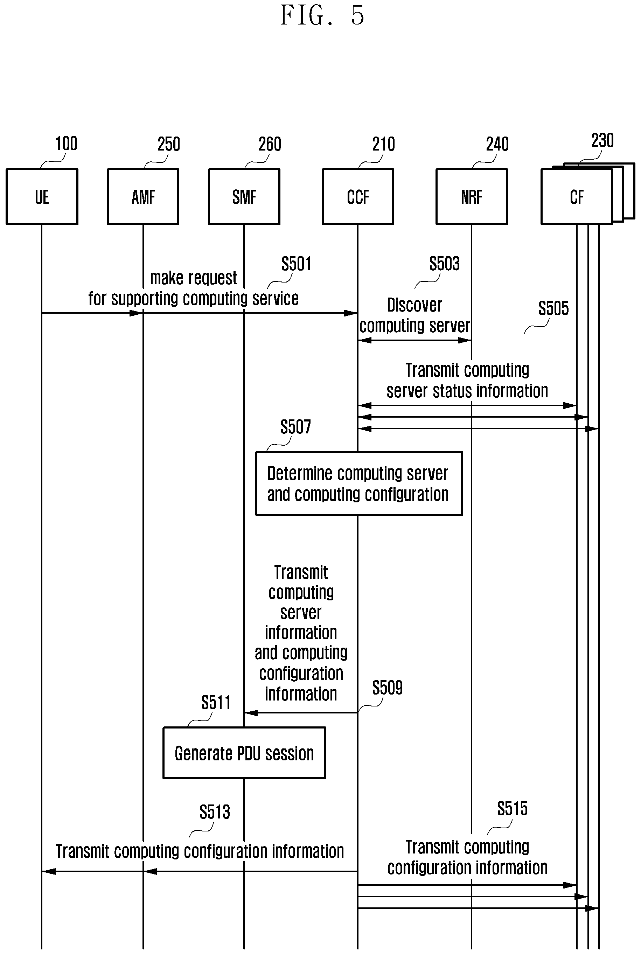

FIG. 5 is a flowchart illustrating a PDU session establishment procedure according to an embodiment of the disclosure.

Referring to FIG. 5, the user equipment (UE) 100 may transmit a request for generating a PDU session for supporting a computing service to the CCF 210 in S501. The UE 100 may transmit status information including a detailed requirement of the request, computing capability-related information of the UE 100 or the terminal, and communication capability-related information together with the request for generating the PDU session in S501. The detailed requirement of the request, the computing capability-related information of the UE, and the communication capability-related information may be included in the request for generating the PDU session.

Communication between the UE 100 and the CCF 210 performed in S501 may be performed through the above-described NAS CM message.

In S503, the CCF 210 may transmit all or some of the request service information collected from the UE 100 to the network repository function (NRF). The information which the CCF 210 transmits to the NRF 240 may include a DNN or a computation service ID.

In S503, the CCF 210 may request for discovering computing servers which can provide a computing service satisfying the corresponding information while transmitting all or some of the request service information collected from the UE 100 to the NRF 240. The NRF 240 may transmit a list of CFs 230 connected to computing servers satisfying a condition included in the information received from the CCF 210 among the registered CFs 230 to the CCF 210.

In S505, the CCF 210 may collect information related to a present status of computing resources of each candidate server through communication with CFs 230 connected to candidate servers which can provide the computing service. The information related to the present status of the computing resources may be, for example, the number of instructions which can be executed and information on a processing time.

In S507, the CCF 210 may determine a computing configuration with the computing server(s). The CCF 210 may determine a computing server and a computing configuration to support the computing service requested by the UE 100 according to a predetermined rule based on an operator policy. For example, the CCF 210 may select the closet server(s) from among the computing servers using computing resources at a specific rate (for example, 40%) or lower on the basis of the collected information.

In S509, the CCF 210 may transfer data network access identifiers (DNAIs) of the selected computing servers and information on the computing configuration to a session management function (SMF) 260. The information on the computing configuration may include information on a data path configuration, and the information on the data path configuration may include structure information between UPFs connected to respective servers in the PDU session.

In S511, the SMF 260 may generate a PDU session on the basis of information on computing servers received from the CCF 210 and information on the data path configuration. During the process, the SMF 260 may select at least one user plane function (UPF) on the basis of the information on the computing server and the information on the computing configuration.

In S513, the CCF 210 may transmit the computing configuration information determined in S507 and a computation service ID (or DNN) to the UE 100. In this case, communication between the CCF 210 and the UE 100 may be performed through the NAS CM message, and the corresponding NAS CM message may be transferred to the UE 100 through the AMF 250. When the NAS CM message is transferred to the UE 100 through the AMF 250, the AMF 250 may insert the corresponding message into an N1 CM container within the N1 NAS message and transfer the N1 NAS message to the UE 100.

In S515, the CCF 210 may transfer the computation service ID (or DNN) and the determined computing configuration information to the computing servers selected in S507. The transferring of the information may be performed through the CF 230 connected to the selected computing servers. Communication between the CCF 210 and the CF 230 may be performed through a CF service interface.

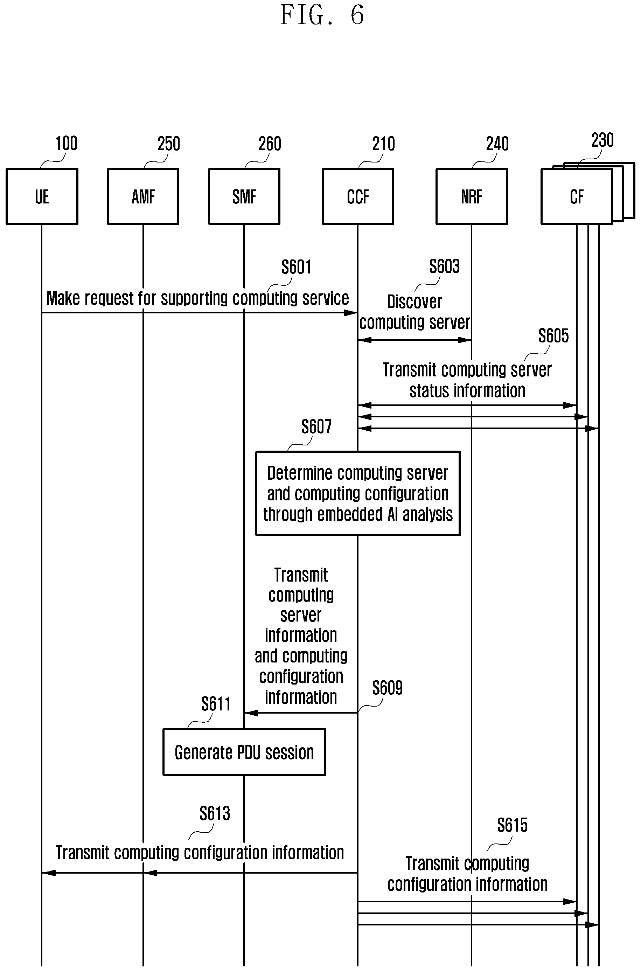

FIG. 6 is a flowchart illustrating a PDU session establishment procedure according to another embodiment of the disclosure.

Referring to FIG. 6, the user equipment (UE) 100 may transmit a request for generating a PDU session for supporting a computing service to the CCF 210 in S601. The UE 100 may transmit status information including a detailed requirement of the request, computing capability-related information of the UE 100 or the terminal, and communication capability-related information together with the request for generating the PDU session in S601. The detailed requirement of the request, the computing capability-related information of the UE, and the communication capability-related information may be included in the request for generating the PDU session.

Communication between the UE 100 and the CCF 210 performed in S601 may be performed through the above-described NAS CM message.

In S603, the CCF 210 may transmit all or some of the request service information collected from the UE 100 to the network repository function (NRF) 240. The information which the CCF 210 transmits to the NRF 240 may include a DNN or a computation service ID.

In S603, the CCF 210 may request for discovering computing servers which can provide a computing service satisfying the corresponding information while transmitting all or some of the request service information collected from the UE 100. The NRF 240 may transmit a list of CFs 230 connected to computing servers satisfying a condition included in the information received from the CCF 210 among the CFs 230 to the CCF 210.

In S605, the CCF 210 may collect information related to a present status of computing resources of each candidate server through communication with CFs 230 connected to candidate servers which can provide the computing service. The information related to the present status of the computing resources may be, for example, the number of instructions which can be executed and information on a processing time.

According to an embodiment of the disclosure, the CCF 210 may have an embedded artificial intelligence (AI) function, and may determine computing server(s) and a computing configuration for providing a computing service requested by the UE 100 by using an AI model of the CCF 210 in S607. The AI model of the CCF 210 may be an AI model designed to determine the computing configuration with the computing server(s), and the corresponding AI model may perform data analysis with requirements collected from the UE 100 and candidate servers, UE status information, and status information of each of the candidate servers as an input value.

In S609, the CCF 210 may transfer data network access identifiers (DNAIs) of the selected computing servers and information on the computing configuration to the session management function (SMF). The information on the computing configuration may include information on a data path configuration, and the information on the data path configuration may include structure information between UPFs connected to respective servers in the PDU session.

In S611, the SMF 260 may generate a PDU session on the basis of information on computing servers received from the CCF 210 and information on the data path configuration. During the process, the SMF 260 may select at least one user plane function (UPF) on the basis of the information on the computing server and the information on the computing configuration.

In S613, the CCF 210 may transmit the computing configuration information determined in S607 and a computation service ID (or DNN) to the UE. In this case, communication between the CCF 210 and the UE 100 may be performed through the NAS CM message, and the corresponding NAS CM message may be transferred to the UE through the AMF. When the NAS CM message is transferred to the UE 100 through the AMF 250, the AMF 250 may insert the corresponding message into an N1 CM container within the N1 NAS message and transfer the N1 NAS message to the UE 100.

In S615, the CCF 210 may transfer the computation service ID (or DNN) and the determined computing configuration information to the computing servers selected in S607. The transferring of the information may be performed through the CF 230 connected to the selected computing servers. Communication between the CCF 210 and the CF 230 may be performed through a CF service interface.

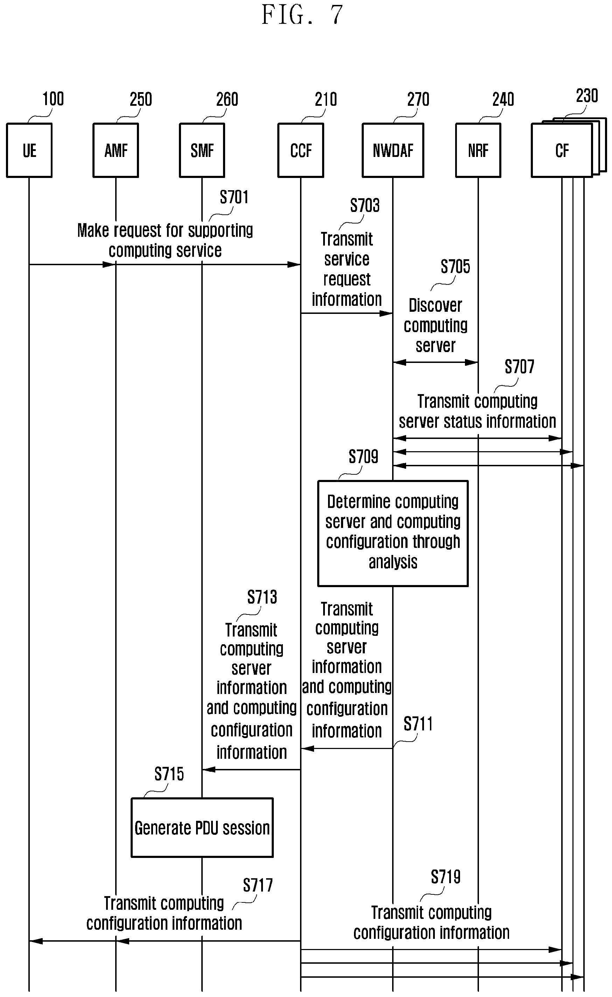

FIG. 7 is a flowchart illustrating a PDU session establishment procedure according to another embodiment of the disclosure.

Referring to FIG. 7, the user equipment (UE) may transmit a request for generating a PDU session for supporting a computing service to the CCF 210 in S701. The UE 100 may transmit status information including a detailed requirement of the request, computing capability-related information of the UE 100 or the terminal, and communication capability-related information together with the request for generating the PDU session in S701. The detailed requirement of the request, the computing capability-related information of the UE, and the communication capability-related information may be included in the request for generating the PDU session.

Communication between the UE 100 and the CCF 210 performed in S701 may be performed through the above-described NAS CM message.

According to an embodiment of the disclosure, the CCF 210 may determine the computing server and the computing configuration on a network data analytics function (NWDAF) 270 by using an AI function supported by the NWDAF 270.

In S703, the CCF 210 may transmit information on the service request collected from the UE 100 or some of the information to the NWDAF 270. The information which the CCF 210 transmits to the NWDAF 270 may include a DNN or a computation service ID.

In S703, the CCF 210 may request for discovering computing servers which can provide a computing service satisfying the corresponding information while transmitting all or some of the service request information collected from the UE 100 to the NWDAF 270.

In S705, the NWDAF 270 may transfer the received discovery request to the NRF 240, and the NRF 240 may transmit a list of CFs 230 connected to computing servers satisfying the condition included in the information received from the NWDAF 270 among the registered CFs 230 to the NWDAF 270.

In S707, the NWDAF 270 may collect information related to a present status of computing resources of each candidate server through communication with CFs 230 connected to candidate servers which can provide the computing service. The information related to the present status of the computing resources may be, for example, the number of instructions which can be executed and information on a processing time.

In S709, the NWDAF 270 may determine computing server(s) and the computing configuration for providing the computing service requested by the UE 100 by using an AI model which the NWDAF 270 has. The AI model of the NWDAF 270 may be an AI model designed to determine the computing configuration with the computing server(s), and the corresponding AI model may perform data analysis with requirements collected from the UE 100 and candidate servers, UE status information, and status information of each of the candidate servers as an input value.

In S711, the NWDAF 270 may transfer DNAI(s) of the selected server(s) and information on the determined computing configuration to the CCF 210.

In S713, the CCF 210 may transfer data network access identifiers (DNAIs) of the selected computing servers and information on the computing configuration to the session management function (SMF) 260. The information on the computing configuration may include information on a data path configuration, and the information on the data path configuration may include structure information between UPFs connected to respective servers in the PDU session.

In S715, the SMF 260 may generate a PDU session on the basis of information on computing servers received from the CCF 210 and information on the data path configuration. During the process, the SMF 260 may select at least one user plane function (UPF) on the basis of the information on the computing server and the information on the computing configuration.

In S717, the CCF 210 may transmit the computing configuration information determined in S709 and a computation service ID (or DNN) to the UE. In this case, communication between the CCF 210 and the UE 100 may be performed through the NAS CM message, and the corresponding NAS CM message may be transferred to the UE 100 through the AMF 250. When the NAS CM message is transferred to the UE 100 through the AMF 250, the AMF 250 may insert the corresponding message into an N1 CM container within the N1 NAS message and transfer the N1 NAS message to the UE 100.

In S719, the CCF 210 may transfer the computation service ID (or DNN) and the determined computing configuration information to the computing servers selected in S709. The transferring of the information may be performed through the CF 230 connected to the selected computing servers. Communication between the CCF 210 and the CF 230 may be performed through a CF service interface.

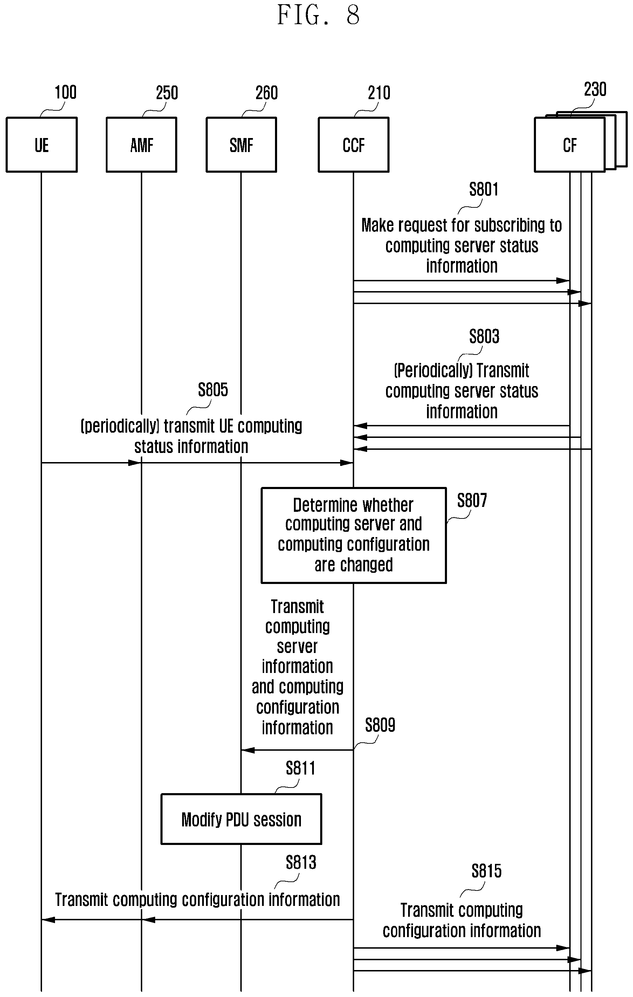

FIG. 8 is a flowchart illustrating a monitoring and update procedure after the PDU session establishment according to an embodiment of the disclosure.

The CCF 210 may periodically receives status information from the UE 100 and the computing server even after the PDU session is generated, and update the computing configuration and modify the PDU session on the basis of the received information.

Referring to FIG. 8, in S801, the CCF 210 may periodically collect status information such as a present status of computing resources from computing servers connected to the CF 230 and make a request for subscription to the CF 230 connected to the computing server(s) through establishment of the PDU session to receive the status information.

In S803, the CF 230 may collect status information of the computing server connected to the CF 230 on the basis of the request for subscription from the CCF 210 and periodically transmit the status information to the CCF 210. In S805, the UE 100 may periodically transfer its own computing status information to the CCF 210.

In S807, the CCF 210 may monitor and analyze status information periodically received from the computing server and the UE and, if the existence of a computing configuration better than the currently used computing configuration is detected or determined during the process, change the computing configuration and the computing servers on the basis thereof.

In S809, the CCF 210 may transfer data network access identifiers (DNAIs) of the selected computing servers and information on the computing configuration to the session management function (SMF) 260. The information on the computing configuration may include information on a data path configuration, and the information on the data path configuration may include structure information between UPFs connected to respective servers in the PDU session.

In S811, the SMF 260 may change a PDU session on the basis of information on computing servers received from the CCF 210 and information on the data path configuration.

In S813, the CCF 210 may transmit the computing configuration information changed in S807 and a computation service ID (or DNN) to the UE. In this case, communication between the CCF 210 and the UE 100 may be performed through the NAS CM message, and the corresponding NAS CM message may be transferred to the UE through the AMF 250. When the NAS CM message is transferred to the UE 100 through the AMF 250, the AMF 250 may insert the corresponding message into an N1 CM container within the N1 NAS message and transfer the N1 NAS message to the UE 100.

In S815, the CCF may transfer the computation service ID (or DNN) and the determined computing configuration information to the computing servers changed in S807.

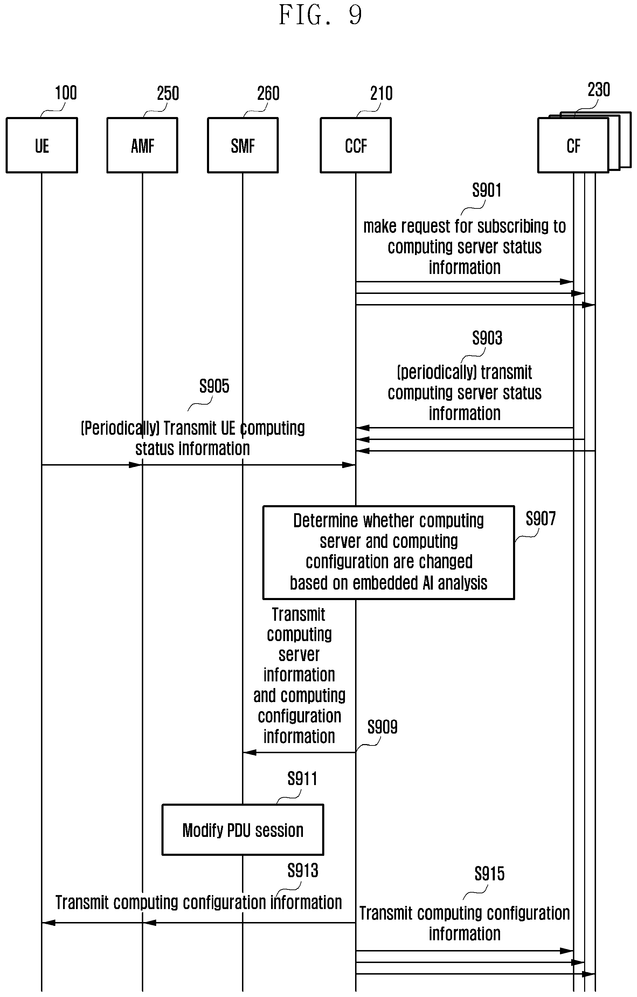

FIG. 9 is a flowchart illustrating a monitoring and update procedure after the PDU session establishment according to another embodiment of the disclosure.

Referring to FIG. 9, in S901, the CCF 210 may periodically collect status information such as a present status of computing resources from computing servers connected to the CF 230 and make a request for subscription to the CF 230 connected to the computing server(s) through establishment of the PDU session to receive the status information.

In S903, the CF 230 may collect status information of the computing server connected to the CF 230 on the basis of the request for subscription from the CCF 210 and periodically transmit the status information to the CCF 210. In S905, the UE 100 may periodically transfer its own computing status information to the CCF 210.

In S907, the CCF 210 may monitor and analyze status information periodically received from the computing server and the UE on the basis of the AI model which the CCF 210 itself has. When the existence of a computing configuration better than the computing configuration currently used by the AI model is detected or determined, the CCF 210 may change the computing configuration and the computing servers on the basis thereof.

In S909, the CCF 210 may transfer data network access identifiers (DNAIs) of the changed computing servers and information on the computing configuration to the session management function (SMF) 260. The information on the computing configuration may include information on a data path configuration, and the information on the data path configuration may include structure information between UPFs connected to respective servers in the PDU session.

In S911, the SMF 260 may change a PDU session on the basis of information on computing servers received from the CCF 210 and information on the data path configuration.

In S913, the CCF 210 may transmit the computing configuration information changed in S907 and a computation service ID (or DNN) to the UE. In this case, communication between the CCF 210 and the UE 100 may be performed through the NAS CM message, and the corresponding NAS CM message may be transferred to the UE 100 through the AMF 250. When the NAS CM message is transferred to the UE 100 through the AMF 250, the AMF 250 may insert the corresponding message into an N1 CM container within the N1 NAS message and transfer the N1 NAS message to the UE 100.

In S915, the CCF 210 may transfer the computation service ID (or DNN) and the determined computing configuration information to the computing servers changed in S907.

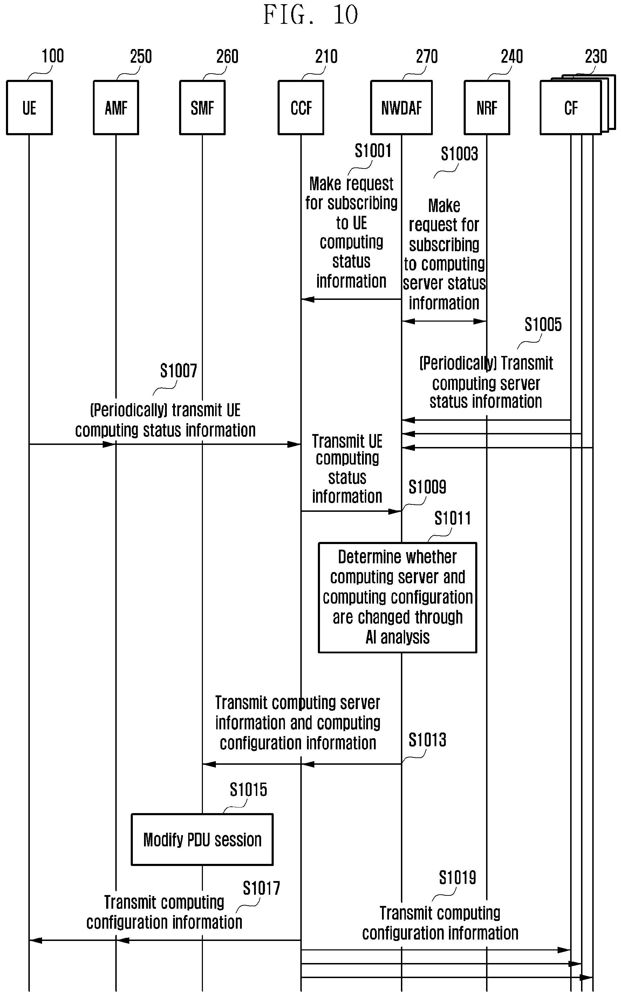

FIG. 10 is a flowchart illustrating a monitoring and update procedure after the PDU session establishment according to another embodiment of the disclosure.

The NWDAF may periodically receives status information from the UE 100 and the computing server even after the PDU session is generated, and update the computing configuration and modify the PDU session on the basis of the received information.

Referring to FIG. 10, in S1001, the NWDAF 270 may make a request for subscribing computing status information to the CCF 210 in order to periodically receive the computing status information of the UE 100. The CCF 210 may transfer a periodic status information update request and information on a period of the update to the UE 100 and, during the process, may transmit the corresponding information to the UE 100 through the NAS CM message.

In S1003, the NWDAF 270 may transmit a subscription request to CFs connected to computing servers, which are selected for the computing service requested by the UE 100 and have the generated PDU session connection, to periodically receive the status information such as the present status of computing resources of the computing servers. The subscription request may be transmitted to the NRF 240 by the NWDAF 270 or may be directly transmitted to the CFs 230.

In S1005, the CF 230 may periodically transmit the computing status information received from the computing servers on the basis of the subscription request made in S1003 to the NWDAF 270.

The UE 100 may periodically transmit its own computing status information to the CCF 210 in S1007, and the CCF 210 may periodically transmit the computing status information received from the UE 100 to the NWDAF 270 on the basis of the subscription request made in S1001 in S1009. Communication between the UE 100 and the CCF 210 performed in S1007 may be performed through the NAS CM message.

In S1011, the NWDAF 270 may monitor and analyze status information periodically received from the computing server and the UE and, if the existence of a computing configuration better than the currently used computing configuration is detected or determined during the process, modify the computing configuration and the computing servers on the basis thereof.

In S1013, the NWDAF 270 may transfer the changed information on the computing configuration and the computing servers to the CCF 210, and the CCF 210 may transfer DNAIs corresponding to the changed computing servers to the SMF 260 and allow the SMF 260 to modify the PDU session in S1015.

In S1017, the CCF 210 may transmit the computing configuration information changed in S1011 and a computation service ID (or DNN) to the UE 100. In this case, communication between the CCF 210 and the UE 100 may be performed through the NAS CM message, and the corresponding NAS CM message may be transferred to the UE 100 through the AMF 250. When the NAS CM message is transferred to the UE 100 through the AMF 250, the AMF 250 may insert the corresponding message into an N1 CM container within the N1 NAS message and transfer the N1 NAS message to the UE 100.

In S1019, the CCF 210 may transfer the computation service ID (or DNN) and the determined computing configuration information to the computing servers modified in S1011.

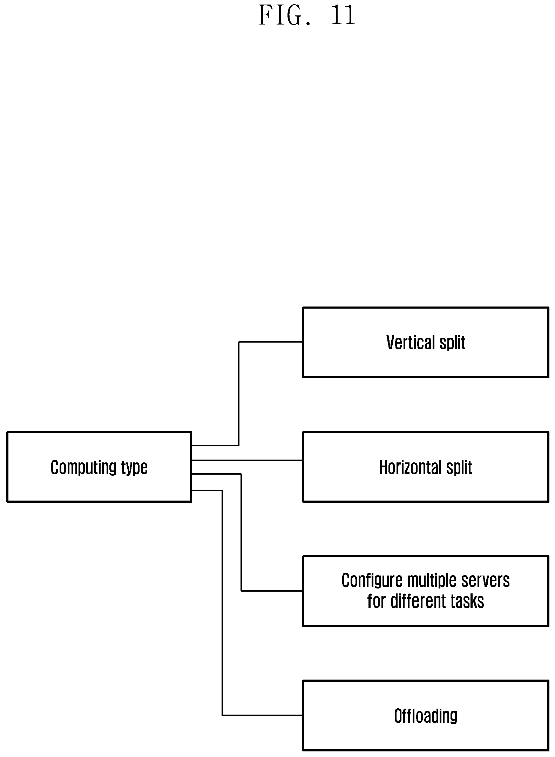

FIG. 11 illustrates classification of computing types of applications operated by the UE according to an embodiment of the disclosure.

For applications requiring communication-computing convergence (for example, application requiring a ultra-low latency or super-high capacity computing service), computing configuration items which should be determined for each computing type of each application should be known to the UE and the CCF. For example, the computing configuration items which should be determined for each computing type may be preconfigured in the UE or the CCF, or the UE or the CCF may receive the same from another NF existing in the network, such as a UDM or a PCF. However, different DNNs or computation service IDs may be allocated to computing types of the application. The UE may insert a computation service ID or a DNN corresponding to the computing type of the application making a request for a computing service into a PDU session establishment request message. The CCF may determine a computing configuration corresponding to the computation service ID or the DNN on the basis of the request or information received from the UE or the CF and transmit the computing configuration to the UE and the CF.

Referring to FIG. 11, examples of kinds of computing types which can be determined for applications are illustrated.

Vertical split corresponds to the case in which a computing output value of one server is a computing input values of the next server in a data path, and split computing of a deep neural network may be an example of vertical split.

Horizontal split corresponds to the case in which a plurality of servers receive an input value from the same server or UE and perform computing in parallel. In an example of the horizontal split, when image processing is performed, a single server or UE may divide a frame into a plurality of areas and perform transmission to a plurality of servers, and each of the plurality of servers may perform object detection in its own allocated area. In this case, the divided areas may overlap each other, and, for example, a single server or UE may separate person and background areas in an image frame and transfer the same to different servers.

In another example of the horizontal split, when data processing for hologram is performed, in order to prevent a situation in which large workload occupies the network to perform compression and decompression therefor, a plurality of edge servers close to the UE may separately process the compression and the decompression.

Multiple servers for different tasks correspond to the case in which various types of servers for processing different tasks exist in one data path. For example, when data processing for hologram is performed, a server for performing compression and decompression and a server for generating a central hologram separately exist.

Offloading corresponds to the case in which a server receives a computing input value of the UE and performs computing instead of the UE and, for example, the computing input value may be transferred to a server capable of processing computing for a V2X-related input value within specific latency and transmitting the same to the UE. A server closer to the UE may have a low computing capability and a high present status of the use of resources (computing load), and a server farther from the UE may have an increasing communication delay.

The CCF may determine a computing configuration corresponding to a computing type (computation service ID or DNN) of the application requested by the UE during a PDU session establishment procedure and transfer the determined computing configuration to the UE and the CF. The computing configuration determined during the process may include the following examples.
- Hologram: Horizontal split - whether compression/decompression is enabled, a horizontal split rate when enabled, DANIs or UPF IDs for compressed and decompressed server(s), and a DNAI or a UPF ID for a hologram generation server
- Object detection: Horizontal split - whether detection object is enabled, a horizontal split rate when enabled, and a DNAI or a UPF ID for an object detection server
- Deep neural network split computing: vertical split - whether a deep neural network is enabled, split information between the UE and servers when enabled (the number of layers per UE/server), and DNAIs or UPF IDs of intermediate and end servers in a data path
   Information required by the CCF to determine the computing configuration may include the following examples.
- Information transferred to the CCF from the UE: inserted into a PDU session request message
   - Whether to be supported by the UE
      - Horizontal split - compression/decompression: separates workload according to a configuration of the CCF and transfers the same to different servers
      - Horizontal split - object detection: primarily performs object detection in workload or divides an area for additionally performing/completing object detection in a plurality of servers simply according to a rate and transfers the same to the servers
      - Vertical split - deep neural network: AI computing for some layers is performed by the UE
   - A present status of computing resources of the UE (the number of instructions and processing time information)
   - A computation service ID or a DNN
   - The case of AI model split computing: the model size and the total number of layers
   - A preferred computation type: offload/split/both
   - Computing load information (a frame size and a frame rate in the case of an image)
   - Mobility: a change in GPS information for a specific time (movement by a vehicle or movement by walk is detected and coverage of an allocated server is determined)
   - UE power: a connected state (plugged)/a non-connected state (unplugged)
- Information transferred to the CCF from the CF: CF allocation information to each computing server and information on a computing server which the CF registers in the NRF and updates. When the CCF needs information, the CCF can secure information on each CF through CF discovery
   - A server list providing function of the computing configuration corresponding to each application (a location, a DNAI, the existence or the non-existence of an IP anchor UPF connection, and a present status of available resources)

The overall operation of the network according to the computing configuration may include the following examples.

### 1) Hologram

- A computing configuration
   - Horizontal split - whether compression/decompression is enabled: enabled
   - A horizontal split rate when enabled: 4:6
   - Intermediate server(s) for compression/decompression: server 1 (DNAI=x1, UPF ID =x2) and server 2 (DNAI=y1, UPF ID =y2)
   - An end hologram generation server: server 3 (DNAI=z1, UPF ID =z2)
- The SMF generates PDU sessions connecting the gNB to UPFs x2 and y2 interfacing with server 1 and server 2 and connecting the UPFs x2 and y2 to the UPF z2 interfacing with server 3 on the basis of the configuration. Further, the SMF may allocate a new UPF u serving to branch between x2 and y2.
- The UE separates a frame or an object at a rate of 4:6 and transmits the separated frames or objects to server 1 and server 2, respectively.
   - A method of separating data to be transmitted to respective severs
      - Example 1: the SMF allocates two different QoS flows to the corresponding PDU session. The UPF u classifies data to be transmitted to UPF x2 and UFP y2 through QoS flow information of each piece of data
      - Example 2: adds a field for separating a traffic type to a RAN layer 2 header (for example, an SDAP header) of each data packet. The gNB transfers corresponding field information to the UPF u through a GTP header and identify a UPF to which a data packet is transmitted through the corresponding information

### • 2) Deep neural network split computing

- A computing configuration
   - Vertical split - whether a deep neural network is enabled: enabled
   - Split information between the UE and servers when enabled (the number of layers per UE/server): splits the layer between the UE, server 1, server 2, and server 3 into 1, 2, 2, and 4
   - Single/multiple intermediate server(s) - object detection server: server 1 (DNAI=x1, UPF ID =x2) and server 2 (DNAI=y1, UPF ID =y2)
   - A single end server: server 3 (DNAI=z1, UPF ID =z2)
- The SMF generates a PDU session connecting x2 to y2 and y2 to z2 according to the configuration
- The UE calculates a first layer of the AI model and then transmit a result value (output) through the corresponding PDU session. The UPF x2 transfers the corresponding data to server 1, and server 1 further calculates two layers and then transmits the result value through the corresponding PDU session by x2. The UPF y2 transfers the corresponding data to server 2, and server 2 further calculates two layers and then transmits the result value through the corresponding PDU session by y2. The UPF z3 receives the corresponding data and transfers the same to server 3, and server 3 further calculates four layers.

As described above, the computing configuration including the computing type, the split structure and rate, the connection structure between servers, and the data path may be determined by the CCF or the UE, the SMF may make the connection between servers on the basis of the computing configuration, and the UE may perform computing work allocated to the UE according to the computing configuration and transfer the result to another network entity.

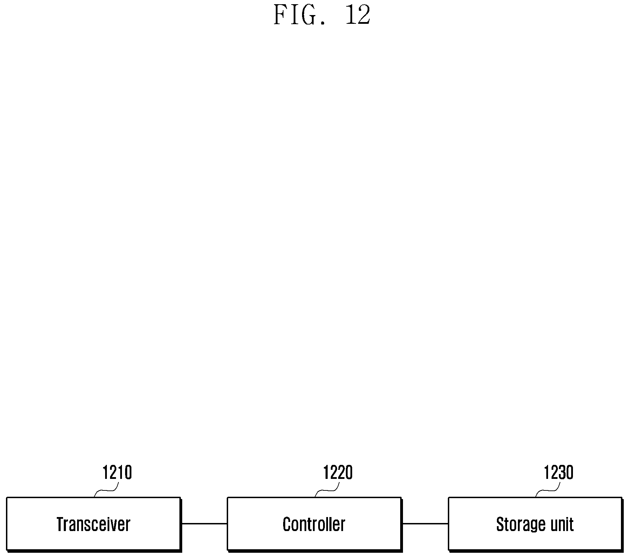

FIG. 12 illustrates a structure of a UE according to an embodiment of the disclosure.

Referring to FIG. 12, the UE may include a transceiver 1210, a controller 1220, and a storage unit 1230. In the disclosure, the controller may be defined as a circuit, an application-specific integrated circuit, or at least one processor.

The transceiver 1210 may transmit/receive a signal to/from another network entity. The transceiver 1210 may receive, for example, system information from the BS and receive a synchronization signal or a reference signal.

The controller 1220 may control the overall operation of the UE according to an embodiment proposed by the present disclosure. For example, the controller 1220 may control a signal flow between blocks to perform the operation according to the above-described flowchart. Specifically, the controller 1220 may control an operation proposed in the disclosure in order to transfer a request for supporting a computing service to a specific network entity and receive computing configuration information from the specific network entity in a split computing system or a distributed computing system according to an embodiment of the disclosure.

The storage unit 1230 may store at least one piece of information transmitted and received through the transceiver 1210 and information generated through the controller 1220. For example, the storage unit 1230 may store computing type information of each application and computing configuration information which should be determined for each computing type.

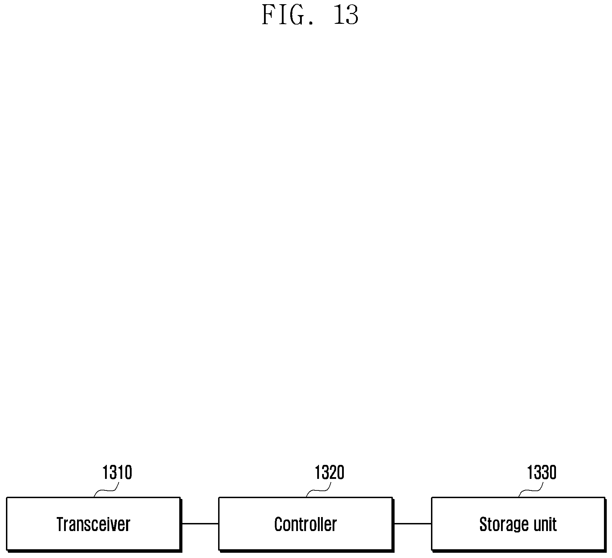

FIG. 13 illustrates a structure of a network entity according to an embodiment of the disclosure. The network entity may be one of network entities of a CCF, a CEF, a CF, an NRF, an AMF, an SMF, and an NWDAF.

The transceiver 1310 may transmit/receive a signal to/from another network entity. The transceiver 1310 may transmit, for example, computing configuration information to the UE and transmit a synchronization signal or a reference signal.

The controller 1320 may control the overall operation of the network entity according to an embodiment proposed in the disclosure. For example, the controller 1320 may control a signal flow between blocks to perform the operation according to the above-described flowchart. Specifically, the controller 1320 may control an operation proposed in the disclosure in order to select a computing server and determine a computing configuration in a split computing system or a distributed computing system according to an embodiment of the disclosure.

The storage unit 1330 may store at least one piece of information transmitted and received through the transceiver 1310 and information generated through the controller 1320. For example, the storage unit 1330 may store information on computing servers, information on AI, and information on the computing configuration.

## Claims

1. A method performed by a first network entity (210) in a wireless communication system, the method comprising:
receiving (S501), from a user equipment, UE (100), a request for supporting a computing service for an operation of an application executed in the UE (100), and status information of the UE (100);
transmitting (S503), to a network repository function, NRF, requirement information related to the request for supporting the computing service and a request for discovering a computing server;
receiving (S503), from the NRF, information on a second network entity connected to and managing at least one computing server;
receiving (S505), from the second network entity (230), status information of the at least one computing server;
determining (S507), based on the received status information of the at least one computing server and the status information of the UE, a computing server and a computing configuration for supporting the operation of the application;
transmitting (S509), to a session management function, SMF, a data network access identifier, DNAI, of the determined computing server, and information on the determined computing configuration; and
transmitting (S513, S515), to the UE (100) or the second network entity (230), the information on the determined computing configuration.

2. The method of claim 1, wherein the determining of the computing server and the computing configuration for supporting the operation of the application comprises determining the computing server and the computing configuration, based on a predetermined rule according to status information of the UE and status information of the computing server.

3. The method of claim 1, wherein the determining of the computing server and the computing configuration for supporting the operation of the application comprises determining the computing server and the computing configuration by analyzing status information of the UE and the status information of the computing server by using embedded artificial intelligence, AI, of the first network entity.

4. The method of claim 1, further comprising:
transmitting, to the second network entity, a subscription request for periodically updating status information of the computing server;
periodically receiving, from the second network entity, status information of the at least one computing server and periodically receiving, from the UE, status information of the UE; and
determining whether to change current computing configuration, based on the periodically received status information of the computing server and the periodically received status information of the UE.

5. The method of claim 1, wherein the SMF is configured to generate a PDU session, based on the DNAI of the computing server received from the first network entity and the information on the computing configuration.

6. A method performed by a first network entity (210) in a wireless communication system, the method comprising:
receiving (S701), from a user equipment, UE (100), a request for supporting a computing service for an operation of an application executed in the UE (100), and status information of the UE (100);
transmitting (S703), to a network data analytics function, NWDAF, requirement information related to the request for supporting the computing service;
receiving (S711), from the NWDAF, information on a determined computing server and a determined computing configuration for supporting the operation of the application, wherein the determined computing server is managed by a second network entity (230);
transmitting (S713), to a session management function, SMF, a data network access identifier, DNAI, of the determined computing server, and the information on the determined computing configuration; and
transmitting (S717, S719), to the UE (100) or the second network entity (230), the information on the determined computing configuration.

7. A method performed by a second network entity (230) in a wireless communication system, the method comprising:
transmitting (S303), to a third network entity or a network repository function, NRF (240), a request for registering or updating a network function, NF, profile of the second network entity (230) including information on at least one computing server;
receiving (S505, S707), from a first network entity (210) or a network data analytics function, NWDAF (270), a request for status information of the at least one computing server managed by the second network entity (230);
transmitting (S505, S707), to the first network entity (210) or the NWDAF (270), the status information of the at least one computing server, based on the request for the status information; and
receiving (S515, S719), from the first network entity (210), information on a determined computing configuration for supporting an operation of an application executed in a UE (100).

8. The method of claim 7, further comprising:
receiving, from the first network entity or the NWDAF, a subscription request for periodically updating the status information of the computing server; and
periodically transmitting, to the first network entity or the NWDAF, the status information of the at least one computing server.

9. A first network entity (210) in a wireless communication system, the first network entity (210) comprising:
a transceiver; and
a controller,
wherein the controller is configured to:
receive, from a user equipment, UE (100), a request for supporting a computing service for an operation of an application executed in the UE (100), and status information of the UE (100);
transmit, to a network repository function, NRF, requirement information related to the request for supporting the computing service and a request for discovering a computing server;
receive, from the NRF, information on a second network entity connected to and managing at least one computing server;
receive, from the second network entity (230), status information of the at least one computing server;
determine, based on the received status information of the at least one computing server and the status information of the UE, a computing server and a computing configuration for supporting the operation of the application;
transmit, to a session management function, SMF, a data network access identifier, DNAI, of the determined computing server, and information on the determined computing configuration; and
transmit, to the UE (100) or the second network entity (230), the information on the determined computing configuration.

10. The first network entity of claim 9, wherein the controller is configured to determine the computing server and the computing configuration, based on a predetermined rule according to status information of the UE and status information of the computing server.

11. The first network entity of claim 9, wherein the controller is further configured to, when determining the computing server and the computing configuration for supporting the operation of the application, determine the computing server and the computing configuration by analyzing status information of the UE and the status information of the computing server by using embedded artificial intelligence (AI) of the first network entity.

12. The first network entity of claim 9, wherein the controller is further configured to:
transmit, to the second network entity, a subscription request for periodically updating status information of the computing server;
periodically receive, from the second network entity, status information of the at least one computing server and periodically receive, from the UE, status information of the UE; and
determine whether to change current computing configuration, based on the periodically received status information of the computing server and the periodically received status information of the UE.

13. The first network entity of claim 9, wherein the SMF is configured to generate a PDU session, based on the DNAI of the computing server received from the first network entity and the information on the computing configuration.

14. A first network entity (210) in a wireless communication system, the first network entity (210) comprising:
a transceiver; and
a controller,
wherein the controller is configured to:
receive, from a user equipment, UE (100), a request for supporting a computing service for an operation of an application executed in the UE (100), and status information of the UE (100);
transmit, to a network data analytics function, NWDAF, requirement information related to the request for supporting the computing service;
receive, from the NWDAF, information on a determined computing server and a determined computing configuration for supporting the operation of the application;
transmit, to a session management function, SMF, a data network access identifier, DNAI, of the determined computing server, and the information on the determined computing configuration; and
transmit, to the UE (100) or a second network entity (230) managing the determined computing server, the information on the determined computing configuration.

15. A second network entity (230) in a wireless communication system, the second network entity (230) comprising:
a transceiver; and
a controller,
wherein the controller is configured to:
transmit, to a third network entity or a network repository function, NRF (240), a request for registering or updating a network function, NF, profile of the second network entity (230) including information on at least one computing server;
receive, from a first network entity (210) or a network data analytics function, NWDAF (270), a request for status information of the at least one computing server managed by the second network entity (230);
transmit, to the first network entity (210) or the NWDAF (270), the status information of the at least one computing server, based on the request for the status information; and
receive, from the first network entity (210), information on a determined computing configuration for supporting an operation of an application executed in a UE (100).

## Patentansprüche

1. Verfahren, das von einer ersten Netzwerkeinheit (210) in einem drahtlosen Kommunikationssystem durchgeführt wird, wobei das Verfahren umfasst:
Empfangen (S501), von einem Benutzergerät, UE (100), einer Anforderung zum Unterstützen eines Rechendienstes für einen Betrieb einer Anwendung, die in dem UE (100) ausgeführt wird, und von Statusinformationen des UE (100);
Übertragen (S503), an eine Netzwerk-Repository-Funktion, NRF, von Anforderungsinformationen in Bezug auf die Anforderung zum Unterstützen des Rechendienstes und einer Anforderung zum Erkennen eines Rechenservers;
Empfangen (S503), von der NRF, von Informationen über eine zweite Netzwerkeinheit, die mit mindestens einem Rechenserver verbunden ist und diesen verwaltet;
Empfangen (S505), von der zweiten Netzwerkeinheit (230), von Statusinformationen des mindestens einen Rechenservers;
Bestimmen (S507), basierend auf den empfangenen Statusinformationen des mindestens einen Rechenservers und den Statusinformationen des UE, eines Rechenservers und einer Rechenkonfiguration zum Unterstützen des Betriebs der Anwendung;
Übertragen (S509), an eine Sitzungsverwaltungsfunktion, SMF, einer Datennetzwerkzugangskennung, DNAI, des bestimmten Rechenservers und von Informationen über die bestimmte Rechenkonfiguration; und
Übertragen (S513, S515), an das UE (100) oder die zweite Netzwerkeinheit (230), der Informationen über die bestimmte Rechenkonfiguration.

2. Verfahren nach Anspruch 1, wobei das Bestimmen des Rechenservers und der Rechenkonfiguration zum Unterstützen des Betriebs der Anwendung Bestimmen des Rechenservers und der Rechenkonfiguration basierend auf einer vorgegebenen Regel gemäß Statusinformationen des UE und Statusinformationen des Rechenservers umfasst.

3. Verfahren nach Anspruch 1, wobei das Bestimmen des Rechenservers und der Rechenkonfiguration zum Unterstützen des Betriebs der Anwendung Bestimmen des Rechenservers und der Rechenkonfiguration durch Analysieren von Statusinformationen des UE und der Statusinformationen des Rechenservers unter Verwendung einer eingebetteten künstlichen Intelligenz, KI, der ersten Netzwerkeinheit umfasst.

4. Verfahren nach Anspruch 1, ferner umfassend:
Übertragen, an die zweite Netzwerkeinheit, einer Abonnementanforderung zum periodischen Aktualisieren von Statusinformationen des Rechenservers;
periodisches Empfangen, von der zweiten Netzwerkeinheit, von Statusinformationen des mindestens einen Rechenservers und periodisches Empfangen, von dem UE, von Statusinformationen des UE; und
Bestimmen, ob eine aktuelle Rechenkonfiguration geändert werden soll, basierend auf den periodisch empfangenen Statusinformationen des Rechenservers und den periodisch empfangenen Statusinformationen des UE.

5. Verfahren nach Anspruch 1, wobei die SMF dazu konfiguriert ist, basierend auf der DNAI des Rechenservers, die von der ersten Netzwerkeinheit empfangen wird, und den Informationen über die Rechenkonfiguration eine PDU-Sitzung zu erzeugen.

6. Verfahren, das von einer ersten Netzwerkeinheit (210) in einem drahtlosen Kommunikationssystem durchgeführt wird, wobei das Verfahren umfasst:
Empfangen (S701), von einem Benutzergerät, UE (100), einer Anforderung zum Unterstützen eines Rechendienstes für einen Betrieb einer Anwendung, die in dem UE (100) ausgeführt wird, und von Statusinformationen des UE (100);
Übertragen (S703), an eine Netzwerkdatenanalysefunktion, NWDAF, von Anforderungsinformationen in Bezug auf die Anforderung zum Unterstützen des Rechendienstes;
Empfangen (S711), von der NWDAF, von Informationen über einen bestimmten Rechenserver und eine bestimmte Rechenkonfiguration zum Unterstützen des Betriebs der Anwendung, wobei der bestimmte Rechenserver von einer zweiten Netzwerkeinheit (230) verwaltet wird;
Übertragen (S713), an eine Sitzungsverwaltungsfunktion, SMF, einer Datennetzwerkzugangskennung, DNAI, des bestimmten Rechenservers und der Informationen über die bestimmte Rechenkonfiguration; und
Übertragen (S717, S719), an das UE (100) oder die zweite Netzwerkeinheit (230), der Informationen über die bestimmte Rechenkonfiguration.

7. Verfahren, das von einer zweiten Netzwerkeinheit (230) in einem drahtlosen Kommunikationssystem durchgeführt wird, wobei das Verfahren umfasst:
Übertragen (S303), an eine dritte Netzwerkeinheit oder eine Netzwerk-Repository-Funktion, NRF (240), einer Anforderung zum Registrieren oder Aktualisieren eines Netzwerkfunktions-, NF,-Profils, der zweiten Netzwerkeinheit (230), die Informationen über mindestens einen Rechenserver enthält;
Empfangen (S505, S707), von einer ersten Netzwerkeinheit (210) oder einer Netzwerkdatenanalysefunktion, NWDAF (270), einer Anforderung von Statusinformationen des mindestens einen Rechenservers, der von der zweiten Netzwerkeinheit (230) verwaltet wird;
Übertragen (S505, S707), an die erste Netzwerkeinheit (210) oder die NWDAF (270), der Statusinformationen des mindestens einen Rechenservers basierend auf der Anforderung der Statusinformationen; und
Empfangen (S515, S719), von der ersten Netzwerkeinheit (210), von Informationen über eine bestimmte Rechenkonfiguration zum Unterstützen eines Betriebs einer Anwendung, die in einem UE (100) ausgeführt wird.

8. Verfahren nach Anspruch 7, ferner umfassend:
Empfangen, von der ersten Netzwerkeinheit oder der NWDAF, einer Abonnementanforderung zum periodischen Aktualisieren der Statusinformationen des Rechenservers; und
periodisches Übertragen, an die erste Netzwerkeinheit oder die NWDAF, der Statusinformationen des mindestens einen Rechenservers.

9. Erste Netzwerkeinheit (210) in einem drahtlosen Kommunikationssystem, wobei die erste Netzwerkeinheit (210) umfasst:
einen Sendeempfänger; und
eine Steuerung,
wobei die Steuerung konfiguriert ist zum:
Empfangen, von einem Benutzergerät, UE (100), einer Anforderung zum Unterstützen eines Rechendienstes für einen Betrieb einer Anwendung, die in dem UE (100) ausgeführt wird, und von Statusinformationen des UE (100);
Übertragen, an eine Netzwerk-Repository-Funktion, NRF, von Anforderungsinformationen in Bezug auf die Anforderung zum Unterstützen des Rechendienstes und einer Anforderung zum Erkennen eines Rechenservers;
Empfangen, von der NRF, von Informationen über eine zweite Netzwerkeinheit, die mit mindestens einem Rechenserver verbunden ist und diesen verwaltet;
Empfangen, von der zweiten Netzwerkeinheit (230), von Statusinformationen des mindestens einen Rechenservers;
Bestimmen, basierend auf den empfangenen Statusinformationen des mindestens einen Rechenservers und den Statusinformationen des UE, eines Rechenservers und einer Rechenkonfiguration zum Unterstützen des Betriebs der Anwendung;
Übertragen, an eine Sitzungsverwaltungsfunktion, SMF, einer Datennetzwerkzugangskennung, DNAI, des bestimmten Rechenservers und von Informationen über die bestimmte Rechenkonfiguration; und
Übertragen, an das UE (100) oder die zweite Netzwerkeinheit (230), der Informationen über die bestimmte Rechenkonfiguration.

10. Erste Netzwerkeinheit nach Anspruch 9, wobei die Steuerung dazu konfiguriert ist, den Rechenserver und die Rechenkonfiguration basierend auf einer vorgegebenen Regel gemäß Statusinformationen des UE und Statusinformationen des Rechenservers zu bestimmen.

11. Erste Netzwerkeinheit nach Anspruch 9, wobei die Steuerung ferner dazu konfiguriert ist, beim Bestimmen des Rechenservers und der Rechenkonfiguration zum Unterstützen des Betriebs der Anwendung den Rechenserver und die Rechenkonfiguration durch Analysieren von Statusinformationen des UE und der Statusinformationen des Rechenservers unter Verwendung einer eingebetteten künstlichen Intelligenz (KI) der ersten Netzwerkeinheit zu bestimmen.

12. Erste Netzwerkeinheit nach Anspruch 9, wobei die Steuerung ferner konfiguriert ist zum:
Übertragen, an die zweite Netzwerkeinheit, einer Abonnementanforderung zum periodischen Aktualisieren von Statusinformationen des Rechenservers;
periodisches Empfangen, von der zweiten Netzwerkeinheit, von Statusinformationen des mindestens einen Rechenservers und periodisches Empfangen, von dem UE, von Statusinformationen des UE; und
Bestimmen, ob eine aktuelle Rechenkonfiguration geändert werden soll, basierend auf den periodisch empfangenen Statusinformationen des Rechenservers und den periodisch empfangenen Statusinformationen des UE.

13. Erste Netzwerkeinheit nach Anspruch 9, wobei die SMF dazu konfiguriert ist, basierend auf der DNAI des Rechenservers, die von der ersten Netzwerkeinheit empfangen wird, und den Informationen über die Rechenkonfiguration eine PDU-Sitzung zu erzeugen.

14. Erste Netzwerkeinheit (210) in einem drahtlosen Kommunikationssystem, wobei die erste Netzwerkeinheit (210) umfasst:
einen Sendeempfänger; und
eine Steuerung,
wobei die Steuerung konfiguriert ist zum:
Empfangen, von einem Benutzergerät, UE (100), einer Anforderung zum Unterstützen eines Rechendienstes für einen Betrieb einer Anwendung, die in dem UE (100) ausgeführt wird, und von Statusinformationen des UE (100);
Übertragen, an eine Netzwerkdatenanalysefunktion, NWDAF, von Anforderungsinformationen in Bezug auf die Anforderung zum Unterstützen des Rechendienstes;
Empfangen, von der NWDAF, von Informationen über einen bestimmten Rechenserver und eine bestimmte Rechenkonfiguration zum Unterstützen des Betriebs der Anwendung;
Übertragen, an eine Sitzungsverwaltungsfunktion, SMF, einer Datennetzwerkzugangskennung, DNAI, des bestimmten Rechenservers und der Informationen über die bestimmte Rechenkonfiguration; und
Übertragen, an das UE (100) oder eine zweite Netzwerkeinheit (230), die den bestimmten Rechenserver verwaltet, der Informationen über die bestimmte Rechenkonfiguration.

15. Zweite Netzwerkeinheit (230) in einem drahtlosen Kommunikationssystem, wobei die zweite Netzwerkeinheit umfasst:
einen Sendeempfänger; und
eine Steuerung,
wobei die Steuerung konfiguriert ist zum:
Übertragen, an eine dritte Netzwerkeinheit oder eine Netzwerk-Repository-Funktion, NRF (240), einer Anforderung zum Registrieren oder Aktualisieren eines Netzwerkfunktionsprofils, NF-Profils, der zweiten Netzwerkeinheit (230), die Informationen über mindestens einen Rechenserver enthält;
Empfangen, von einer ersten Netzwerkeinheit (210) oder einer Netzwerkdatenanalysefunktion, NWDAF (270), einer Anforderung von Statusinformationen des mindestens einen Rechenservers, der von der zweiten Netzwerkeinheit (230) verwaltet wird;
Übertragen, an die erste Netzwerkeinheit (210) oder die NWDAF (270), der Statusinformationen des mindestens einen Rechenservers basierend auf der Anforderung der Statusinformationen; und
Empfangen, von der ersten Netzwerkeinheit (210), von Informationen über eine bestimmte Rechenkonfiguration zum Unterstützen eines Betriebs einer Anwendung, die in einem UE (100) ausgeführt wird.

## Revendications

1. Procédé exécuté par une première entité de réseau (210) dans un système de communication sans fil, le procédé comprenant :
recevoir (S501), en provenance d'un équipement utilisateur, UE (100), une demande de prise en charge d'un service informatique pour une opération d'une application exécutée dans l'UE (100), et des informations d'état de l'UE (100) ;
transmettre (S503), à une fonction de référentiel réseau, NRF, des informations d'exigence relatives à la demande de prise en charge du service informatique et une demande de découverte d'un serveur informatique ;
recevoir (S503), en provenance de la NRF, des informations sur une deuxième entité de réseau connectée à au moins un serveur informatique et gérant celui-ci ;
recevoir (S505), en provenance de la deuxième entité de réseau (230), des informations d'état de l'au moins un serveur informatique ;
déterminer (S507), sur la base des informations d'état reçues de l'au moins un serveur informatique et des informations d'état de l'UE, un serveur informatique et une configuration informatique pour prendre en charge l'opération de l'application ;
transmettre (S509), à une fonction de gestion de session, SMF, un identifiant d'accès au réseau de données, DNAI, du serveur informatique déterminé, et des informations sur la configuration informatique déterminée ; et
transmettre (S513, S515), à l'UE (100) ou à la deuxième entité de réseau (230), les informations sur la configuration informatique déterminée.

2. Procédé de la revendication 1, dans lequel déterminer le serveur informatique et la configuration informatique pour prendre en charge l'opération de l'application comprend déterminer le serveur informatique et la configuration informatique sur la base d'une règle prédéterminée en fonction d'informations d'état de l'UE et d'informations d'état du serveur informatique.

3. Procédé de la revendication 1, dans lequel déterminer le serveur informatique et la configuration informatique pour prendre en charge l'opération de l'application comprend déterminer le serveur informatique et la configuration informatique en analysant des informations d'état de l'UE et les informations d'état du serveur informatique à l'aide d'une intelligence artificielle, IA, intégrée de la première entité de réseau.

4. Procédé de la revendication 1, comprenant en outre :
transmettre, à la deuxième entité de réseau, une demande d'abonnement pour la mise à jour périodique d'informations d'état du serveur informatique ;
recevoir périodiquement, en provenance de la deuxième entité de réseau, des informations d'état de l'au moins un serveur informatique et recevoir périodiquement, en provenance de l'UE, des informations d'état de l'UE ; et
déterminer s'il faut modifier la configuration informatique actuelle, sur la base des informations d'état du serveur informatique reçues périodiquement et des informations d'état de l'UE reçues périodiquement.

5. Procédé de la revendication 1, dans lequel la SMF est configurée pour générer une session PDU, sur la base du DNAI du serveur informatique reçu en provenance de la première entité de réseau et des informations sur la configuration informatique.

6. Procédé exécuté par une première entité de réseau (210) dans un système de communication sans fil, le procédé comprenant :
recevoir (S701), en provenance d'un équipement utilisateur, UE (100), une demande de prise en charge d'un service informatique pour une opération d'une application exécutée dans l'UE (100), et des informations d'état de l'UE (100) ;
transmettre (S703), à une fonction d'analyse de données de réseau, NWDAF, des informations d'exigence relatives à la demande de prise en charge du service informatique ;
recevoir (S711), en provenance de la NWDAF, des informations sur un serveur informatique déterminé et une configuration informatique déterminée pour prendre en charge l'opération de l'application, dans lequel le serveur informatique déterminé est géré par une deuxième entité de réseau (230) ;
transmettre (S713), à une fonction de gestion de session, SMF, un identifiant d'accès au réseau de données, DNAI, du serveur informatique déterminé, et les informations sur la configuration informatique déterminée ; et
transmettre (S717, S719), à l'UE (100) ou à la deuxième entité de réseau (230), les informations sur la configuration informatique déterminée.

7. Procédé exécuté par une deuxième entité de réseau (230) dans un système de communication sans fil, le procédé comprenant :
transmettre (S303), à une troisième entité de réseau ou à une fonction de référentiel réseau, NRF (240), une demande d'enregistrement ou de mise à jour d'un profil de fonction de réseau, NF, de la deuxième entité de réseau (230) comprenant des informations sur au moins un serveur informatique ;
recevoir (S505, S707), en provenance d'une première entité de réseau (210) ou d'une fonction d'analyse de données de réseau, NWDAF (270), une demande d'informations d'état de l'au moins un serveur informatique géré par la deuxième entité de réseau (230) ;
transmettre (S505, S707), à la première entité de réseau (210) ou à la NWDAF (270), les informations d'état de l'au moins un serveur informatique, sur la base de la demande d'informations d'état ; et
recevoir (S515, S719), en provenance de la première entité de réseau (210), des informations sur une configuration informatique déterminée pour prendre en charge une opération d'une application exécutée dans un UE (100).

8. Procédé de la revendication 7, comprenant en outre :
recevoir, en provenance de la première entité de réseau ou de la NWDAF, une demande d'abonnement pour la mise à jour périodique des informations d'état du serveur informatique ; et
transmettre périodiquement, à la première entité de réseau ou à la NWDAF, les informations d'état de l'au moins un serveur informatique.

9. Première entité de réseau (210) dans un système de communication sans fil, la première entité de réseau (210) comprenant :
un émetteur-récepteur ; et
une commande,
dans laquelle la commande est configurée pour :
recevoir, en provenance d'un équipement utilisateur, UE (100), une demande de prise en charge d'un service informatique pour une opération d'une application exécutée dans l'UE (100), et des informations d'état de l'UE (100) ;
transmettre, à une fonction de référentiel réseau, NRF, des informations d'exigence relatives à la demande de prise en charge du service informatique et une demande de découverte d'un serveur informatique ;
recevoir, en provenance de la NRF, des informations sur une deuxième entité de réseau connectée à au moins un serveur informatique et gérant celui-ci ;
recevoir, en provenance de la deuxième entité de réseau (230), des informations d'état de l'au moins un serveur informatique ;
déterminer, sur la base des informations d'état reçues de l'au moins un serveur informatique et des informations d'état de l'UE, un serveur informatique et une configuration informatique pour prendre en charge l'opération de l'application ;
transmettre, à une fonction de gestion de session, SMF, un identifiant d'accès au réseau de données, DNAI, du serveur informatique déterminé, et des informations sur la configuration informatique déterminée ; et
transmettre, à l'UE (100) ou à la deuxième entité de réseau (230), les informations sur la configuration informatique déterminée.

10. Première entité de réseau de la revendication 9, dans laquelle la commande est configurée pour déterminer le serveur informatique et la configuration informatique sur la base d'une règle prédéterminée en fonction d'informations d'état de l'UE et d'informations d'état du serveur informatique.

11. Première entité de réseau de la revendication 9, dans laquelle la commande est en outre configurée pour, lors de la détermination du serveur informatique et de la configuration informatique pour prendre en charge l'opération de l'application, déterminer le serveur informatique et la configuration informatique en analysant des informations d'état de l'UE et les informations d'état du serveur informatique à l'aide d'une intelligence artificielle (IA) intégrée de la première entité de réseau.

12. Première entité de réseau de la revendication 9, dans laquelle la commande est en outre configurée pour :
transmettre, à la deuxième entité de réseau, une demande d'abonnement pour la mise à jour périodique d'informations d'état du serveur informatique ;
recevoir périodiquement, en provenance de la deuxième entité de réseau, des informations d'état de l'au moins un serveur informatique et recevoir périodiquement, en provenance de l'UE, des informations d'état de l'UE ; et
déterminer s'il faut modifier la configuration informatique actuelle, sur la base des informations d'état du serveur informatique reçues périodiquement et des informations d'état de l'UE reçues périodiquement.

13. Première entité de réseau de la revendication 9, dans laquelle la SMF est configurée pour générer une session PDU, sur la base du DNAI du serveur informatique reçu en provenance de la première entité de réseau et des informations sur la configuration informatique.

14. Première entité de réseau (210) dans un système de communication sans fil, la première entité de réseau (210) comprenant :
un émetteur-récepteur ; et
une commande,
dans laquelle la commande est configurée pour :
recevoir, en provenance d'un équipement utilisateur, UE (100), une demande de prise en charge d'un service informatique pour une opération d'une application exécutée dans l'UE (100), et des informations d'état de l'UE (100) ;
transmettre, à une fonction d'analyse de données de réseau, NWDAF, des informations d'exigence relatives à la demande de prise en charge du service informatique ;
recevoir, en provenance de la NWDAF, des informations sur un serveur informatique déterminé et une configuration informatique déterminée pour prendre en charge l'opération de l'application ;
transmettre, à une fonction de gestion de session, SMF, un identifiant d'accès au réseau de données, DNAI, du serveur informatique déterminé, et les informations sur la configuration informatique déterminée ; et
transmettre, à l'UE (100) ou à une deuxième entité de réseau (230) gérant le serveur informatique déterminé, les informations sur la configuration informatique déterminée.

15. Deuxième entité de réseau (230) dans un système de communication sans fil, la deuxième entité de réseau comprenant :
un émetteur-récepteur ; et
une commande,
dans laquelle la commande est configurée pour :
transmettre, à une troisième entité de réseau ou à une fonction de référentiel réseau, NRF (240), une demande d'enregistrement ou de mise à jour d'un profil de fonction de réseau, NF, de la deuxième entité de réseau (230) comprenant des informations sur au moins un serveur informatique ;
recevoir, en provenance d'une première entité de réseau (210) ou d'une fonction d'analyse de données de réseau, NWDAF (270), une demande d'informations d'état de l'au moins un serveur informatique géré par la deuxième entité de réseau (230) ;
transmettre, à la première entité de réseau (210) ou à la NWDAF (270), les informations d'état de l'au moins un serveur informatique, sur la base de la demande d'informations d'état ; et
recevoir, en provenance de la première entité de réseau (210), des informations sur une configuration informatique déterminée pour prendre en charge une opération d'une application exécutée dans un UE (100).
